Europäisches Patentamt

(19) European Patent Office

Office européen des brevets

(11) **EP 0 513 017 B1**

(12) **EUROPEAN PATENT SPECIFICATION**

(45) Date of publication and mention
of the grant of the patent:
**10.10.2001 Bulletin 2001/41**

(51) Int Cl.[7]: **H04B 1/16**, H04Q 7/06

(21) Application number: **91901520.6**

(86) International application number:
**PCT/US90/07285**

(22) Date of filing: **14.12.1990**

(87) International publication number:
**WO 91/10292 (11.07.1991 Gazette 1991/15)**

(54) **A METHOD AND APPARATUS FOR BATTERY CONSERVATION IN A SELECTIVE CALL RECEIVER**

Verfahren und Vorrichtung zur Verlängerung der Lebensdauer von Batterien in einem Selektivrufempfänger.

PROCEDE ET APPAREIL PERMETTANT DE PRESERVER LA DUREE DES PILES D'UN RECEPTEUR D'APPEL SELECTIF

(84) Designated Contracting States:
**AT BE CH DE DK ES FR GB GR IT LI LU NL SE**

(30) Priority: **04.01.1990 US 460699**

(43) Date of publication of application:
**19.11.1992 Bulletin 1992/47**

(73) Proprietor: **MOTOROLA, INC.**
**Schaumburg, IL 60196 (US)**

(72) Inventors:
• **SNOWDEN, Gregory, O.**
**Boca Raton, FL 33487 (US)**
• **DELUCA, Michael, J.**
**Boca Raton, FL 33486 (US)**
• **MOORE, Morris, A.**
**North Lauderdale, FL 33066 (US)**
• **SCHWENDEMAN, Robert, J.**
**Pompano Beach, FL 33060 (US)**
• **WILLARD, David, F.**
**Plantation, FL 33313 (US)**

(74) Representative: **Dunlop, Hugh Christopher et al**
**Motorola,**
**European Intellectual Property Operations**
**Midpoint**
**Alencon Link**
**Basingstoke, Hampshire RG21 7PL (GB)**

(56) References cited:
US-A- 3 851 251          US-A- 4 398 192
US-A- 4 459 701          US-A- 4 763 324

• PATENT ABSTRACTS OF JAPAN, vol. 620, no.
E135 (-) , 09. October 1982 & JP 57 109437 A

**Description**

Field of the Invention

This invention relates in general to selective call receivers, and in particular to selective call receivers receiving synchronous signals.

Background of the Invention

Selective call receivers generally operate using batteries to allow the selective call receivers to be portable and compact. The selective call receivers must, therefore, utilize power saving techniques such as switching the receiver circuit of the selective call receiver 'on' and 'off' in order to obtain the maximum possible life from the batteries. The 'on' time interval of the receiver circuit when the selective call receiver may potentially receive a selective call message addressed to the selective call receiver consumes power. Conversely, the 'off' interval inhibits reception of the signal by the receiver circuit, thereby conserving power. Thus, it is desirable to minimize the 'on' time interval of the receiver circuit.

When the receiver circuit loses the system signal either from the selective call receiver being out of range of the system transmitters, from being shielded by buildings, or when the channel is shared with another signal protocol, the receiver circuit typically returns to the initial synchronization acquisition mode. Regrettably, the synchronous acquisition mode is not very efficient in terms of battery life. Thus, a selective call receiver which is in a weak signal condition for a long period of time will consume a great deal of battery power to re-synchronize. Also when selective call receivers are turned 'off' and then 'on' by the user, the receiver circuit usually powers up in the synchronization acquisition mode to search for the system signal, wasting much battery power.

Thus, what is needed is a selective call receiver which conserves battery power by limiting the time which the selective call receiver operates in the power consuming synchronization acquisition mode.

United States Patent US 3851251, discloses a selective call receiver comprising a non-volatile memory, a receiver for receiving a synchronous signal having a cycle time, a system signal stability and comprising information, synchronization acquisition means for acquiring synchronization with the synchronous signals, activation means for activating the receiving means for a time duration and deactivating means for deactivating the receiver.

US 3851251, also discloses a method for conserving battery power of a selective call receiver comprising the steps of, acquiring synchronization at a first time with a synchronous signal, de-energizing the selective call receiver at a second time without activating the receiver circuit and activating the selective call receiver to search for the synchronous signal at a third time later than the second time, thereby, the cycle time and the signal stability being taken into account.

Summary of the Invention

According to a first aspect of the invention there is provided a method for conserving battery power of a selective call receiver, as set forth in claim 1.

According to a second aspect of the invention there is provided a selective call receiver as set forth in claim 2.

Brief Description of the Drawing

FIG. 1 is a block diagram of a selective call receiver according to the present invention.

FIGs. 2A and 2B are diagrams of the synchronous signalling protocol of the preferred embodiment of the present invention.

FIGs. 3A and 3B is a flowchart of the operation of the preferred embodiment of the present invention.

FIGs. 4A-4C are timing diagrams of the operation of the preferred embodiment of the present invention.

Detailed Description of a Preferred Embodiment

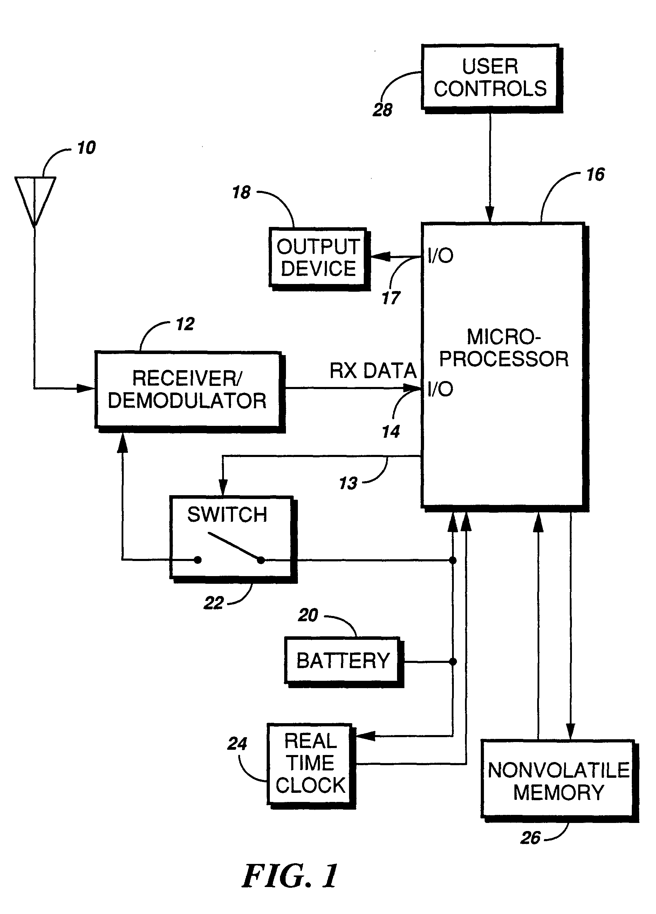

Referring to FIG. 1, a selective call receiver receives signals via an antenna 10. A receiver/demodulator circuit 12 demodulates the received signals on one of a plurality of frequencies and provides the demodulated signals to a data port (RX DATA) 14 of a microprocessor 16. The microprocessor 16 includes at least one other input/output (I/O) port 17 and is programmed to acquire synchronization to and decode a selective call network signalling protocol. Acquiring synchronization comprises two steps: acquiring bit synchronization and acquiring frame synchronization. Bit synchronization is a process used to determine the location of bit boundaries of a data transmission having bits transmitted at a predetermined baud rate, and thereafter, to provide a clock to synchronously sample the bits. Frame synchronization frames the bits transmitted so that the data transmitted is in a form to be decoded thereby indicating various word boundaries such as the first bit of address and data signals. Methods for acquiring synchronization to asynchronous signalling protocols are described in U.S. Patent Nos. 4,506,262 and 4,424,514. When synchronization has been acquired, the receiver's selective call address has been detected, and the signal has been decoded, an output is provided to an output device 18 via the I/O port 17. The output device 18 could be an audio amplifier and a speaker for providing audio output or a liquid crystal display (LCD) for providing a visual output.

A battery 20 supplies power for operation of the selective call receiver, and particularly for operation of the microprocessor 16 and the devices of the receiver/demodulator circuit 12. A switch 22 activates and deactivates the receiver /demodulator circuit 12 (i.e., switches the receiver circuit 'on' and 'off') in response to a signal 13 received from the microprocessor 16. A clock 24 supplies timing signals to the microprocessor 16 for operation of the synchronization acquisition and other routines. The clock 24 is powered by the battery 20 and is a real time clock for maintaining time even when the selective call receiver is de-energized (i.e., turned off). A memory 26 is used for the storage of information necessary to the operation of the routines of the present invention which produce the signal controlling switch 22. The memory 26 is a nonvolatile memory capable of being written into and read from by the microprocessor 16. User selectable controls 28 allow the user to command the microprocessor controller 16 to perform the selective call receiver operations well known to those skilled in the art. The user controls 28 typically include control switches such as an ON/OFF control button for energizing and de-energizing the selective call receiver. For a more detailed description of the fundamental structure and operation of selective call receivers, reference is made to U.S. Patent Number 4,518,961, U.S. Patent Number 4,649,538, and U.S. Patent Number 4,755,816, all commonly assigned to the same assignee as the present invention.

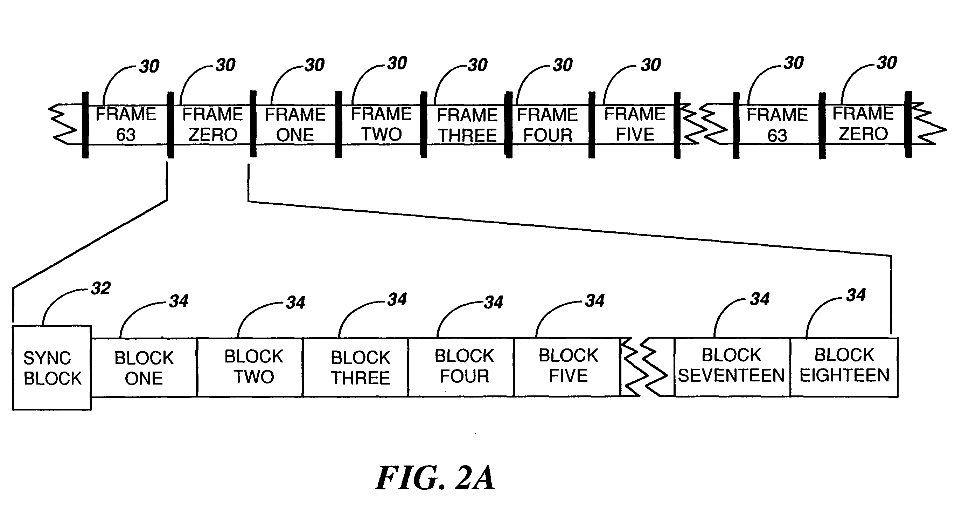

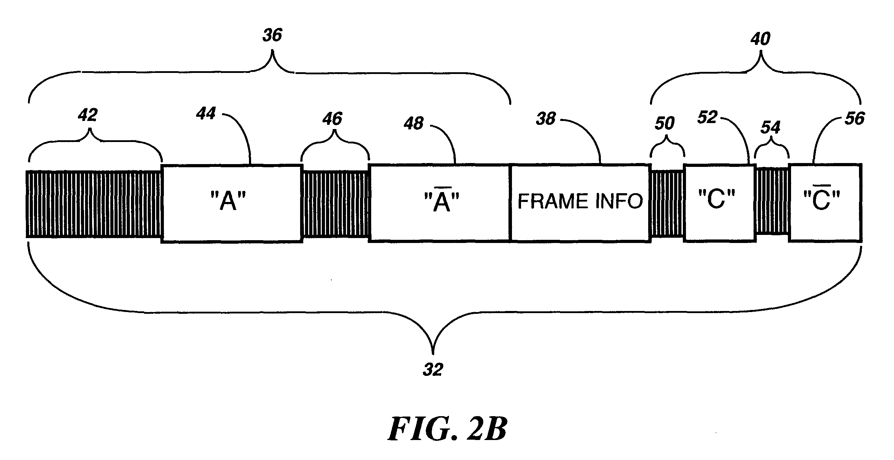

Referring to FIGs. 2A and 2B, the synchronous signalling protocol of the preferred embodiment comprises a system of sixty-four rotating frames 30. Each frame 30 in turn comprises a synchronization (sync) block 32 and eighteen information blocks 34. The time for the system to cycle, i.e. for the sixty-four frames 30 to be transmitted, is 256 seconds with four seconds for each frame 30. The information blocks 34 contain selective call addresses and data and, in some cases, system overhead information.

Referring to FIG. 2B, portions of the sync block 32 of each frame are sent at a predetermined baud rate and may convey the baud rate information necessary to decode the eighteen information blocks. The sync block 32 also comprises synchronization information to allow the selective call receiver to acquire bit and frame synchronization. In the preferred embodiment, the sync block 32 comprises 192 bits when transmitted at 1200 baud for a total of 160 milliseconds (msec) transmission time. The 192 bits comprise a bit and frame synchronization portion 36, a (32,21) BCH word 38 comprising frame information, and information block bit and frame synchronization portion 40. Portion 36 is utilized to acquire bit and frame synchronization. A thirty-two bit pattern 42 of alternating ones and zeros is utilized for acquiring bit synchronization and a (32,21) BCH word "A" 44 conveys the baud rate used to transmit the information blocks and provide frame synchronization. An additional sixteen bit one/zero pattern 46 aids bit synchronization and a (32,21) BCH word "inverted A" 48 is used for redundancy. Portion 40 is transmitted at the baud rate of the information blocks to allow for bit and frame synchronization at the information block baud rate. In like manner to the bit and frame synchronization of portion 36, portion 40 comprises a plurality of bits 50 and a second plurality of bits 54 for bit synchronization. A sixteen bit pattern "C" 52 and "inverted C" 56 are transmitted to allow the selective call receiver to acquire frame synchronization for decoding the subsequent information blocks. At 1200 baud, the pluralities of bits 50 and 54 comprise eight bits each.

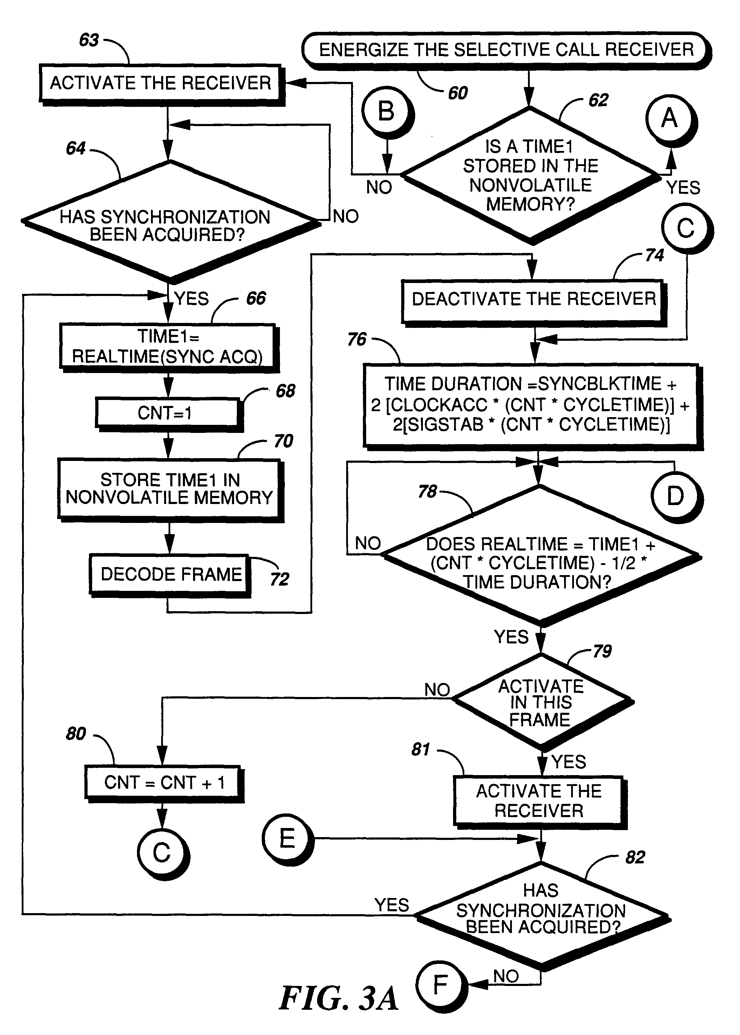

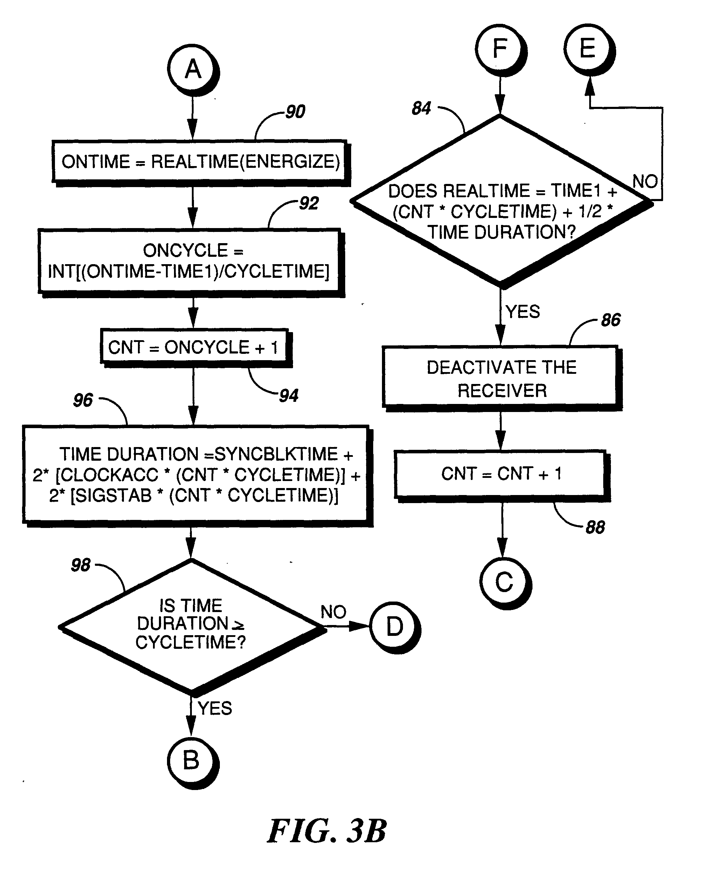

Referring to Figs. 3A and 3B, the operation of the battery saving routine of the present invention begins when the selective call receiver is energized 60, i.e., when the user turns the ON/OFF switch ON. Next, the microprocessor 16 polls the nonvolatile memory 26 to determine whether a value TIME1 is stored therein 62. TIME1 is a value indicating at what time, as measured by the real time clock 24 (FIG. 1), the selective call receiver last acquired synchronization. If no value for TIME1 is stored in the memory 26, step 62, the receiver/demodulator 12 (FIG. 1) is activated and the battery saving routine determines whether synchronization has been acquired with the synchronous signal, step 64. The battery saving routine operates in a loop until synchronization has been acquired, step 64. The process of acquiring synchronization may have a different battery saving routine.

When synchronization has been acquired, step 64, the value TIME1 is set equal to the value REALTIME of the real time clock 24, at the time of synchronization acquisition (SYNC ACQ), step 66, which corresponds with the center of interval 36. A counter CNT, which counts the number of synchronous signal cycles is initialized to one, step 68, and TIME1 is stored in nonvolatile memory, step 70.

The eighteen blocks 34 are decoded in step 72. Power conservation may be performed while receiving blocks 34 based on a signal included therein. Additionally, blocks 34 may include information instructing the receiver to only activate in certain frames.

Since the signalling protocol utilized in the present invention is a synchronous signalling protocol, the battery saving routine can predict with some degree of accuracy when the next sync block 32 (FIG. 2A) of interest to the receiver will be transmitted. The frame is decoded, step 72 and the receiver circuit is deactivated, step 74, by generating a signal 13 from the microprocessor 16 to the switch 22 (FIG. 1), which opens the switch 22. Next, a value TIME DURATION which determines the amount of time that the receiver circuit is activated to attempt to reacquire synchronization is calculated, step 76. In the present invention, TIME DURATION is the sum of three values: the transmission time of the 116 bits of the portion 36 of the sync block 32 represented as the constant SYNCBLKTIME; the deviation due to the accuracy of the real time clock 24 calculated as a constant CLOCKACC, representative of the amount of time the clock loses or gains in a unit of time, multiplied by the product of the counter CNT times a constant CYCLETIME, which represents the amount of time for one frame; and the deviation due to the system signal stability calculated as a constant SIGSTAB, representative of the amount of shift the synchronous signal experiences in a unit of time, multiplied by the product of the counter CNT times CYCLETIME.

In the preferred embodiment, SYNCBLKTIME equals 96.7 milliseconds (msec) since the 116 bits are transmitted at 1200 baud. CYCLETIME equals four seconds, the amount of time to transmit one frame 30 (FIG. 2A). In other embodiments, CYCLETIME may comprise other frame times and may also represent a multiple of frames. If the clock loses one second every thousand seconds, then CLOCKACC equals 0.001. If the signal system stability indicates that for every ten million bits transmitted the synchronous signal shifts one bit, then SIGSTAB equals 0.0000001. Using the above values, in the first synchronous signal cycle, TIME DURATION would equal 104.7 msec. Each successive increment of CNT by one would increase TIME DURATION by 8 msec, a factor of worst case shifting between the real time clock in the selective call receiver and the system signal. It can be seen that the effect of the deviation due to the accuracy of the signal stability is minimal compared to the real time clock for this example. In an alternate embodiment, the signal stability could be expected to be on the order of two parts per million (ppm) and the selective call receiver stability on the order of thirty ppm.

After the calculation of TIME DURATION, step 76, the battery saving routine enters a loop 78 until a time specified by the equation:

$$TIME1 + (CNT \cdot CYCLETIME) - 1/2 \cdot TIME\ DURATION$$

as shown at decision block 78. Since TIME DURATION specifies the time width of a window during which the receiver is activated to search for the signal, and in particular for the sync block 32 (FIG. 2A) of the signal, the equation represents a time one-half the width of the receiver activated time window before the number (CNT) of cycles times CYCLETIME after last acquiring synchronization (TIME1). Upon the equality of step 78, step 79 determines whether or not to activate the receiver in this frame. The determination may be the result of the signal received at step 72, from information stored in the code plug in the pager or from another signal received in the transmission and the frame number. The counter is then incremented by one, step 80, and the operation returns to step 76.

If the receiver, step 81, is activated, the routine determines whether synchronization has been acquired, step 82. If synchronization is acquired, TIME1 is redefined, step 66, CNT is reinitialized, step 68, and processing continues as described above. If synchronization is not acquired within the time window defined by TIME DURATION, step 84, i.e., if synchronization is not acquired by the time described by the equation:

$$TIME1 + (CNT \cdot CYCLETIME) + 1/2 \cdot TIME\ DURATION$$

as shown in decision block 84, the receiver is deactivated, step 86, by applying a signal to close the switch 22 (FIG. 1). The counter CNT is incremented by one, step 88, and the operation of the battery saving routine returns to calculate a new TIME DURATION, step 76.

Battery saving may be achieved when initially acquiring synchronization after the selective call receiver has been turned on (energized), step 60. If a value for TIME1 is stored in the nonvolatile memory, step 62, a variable ONTIME is set equal to the value of the real time clock 24 (FIG. 1) at the time the selective call receiver is turned on (ENERGIZE), step 90. A second variable ONCYCLE is set equal to a function (INT[]) of the difference between ONTIME and TIME1 divided by CYCLETIME, step 92. The function divides the difference in times by the signal cycle time and removes the remainder to obtain an integer result indicative of which signal cycle after last acquiring synchronization the selective call receiver energized. CNT is set equal to the next cycle, step 94, and the time width of the window for activating the receiver (TIME DURATION) is calculated as described above, step 96.

If the window is greater than or equal to a selectable multiple (1/N) of the signal cycle time, it is determined that no benefit of battery power conservation would be gained by using the battery saving routine. Thus the receiver is activated step 63, and the routine enters the idle loop awaiting synchronization acquisition, step 64. For example if N equals one, then the time window would require the receiver to be constantly activated and no benefit would be gained by utilizing the battery saving routine. An N of two would provide for a fifty per cent battery saving duty cycle.

If the window is not greater than or equal to N times the signal cycle time, then processing enters the loop, step 78, in the battery saving routine awaiting the time value of clock 24 (FIG. 1) to equal TIME1 plus (CNT times CYCLETIME) minus one-half TIME DURATION, step 78.

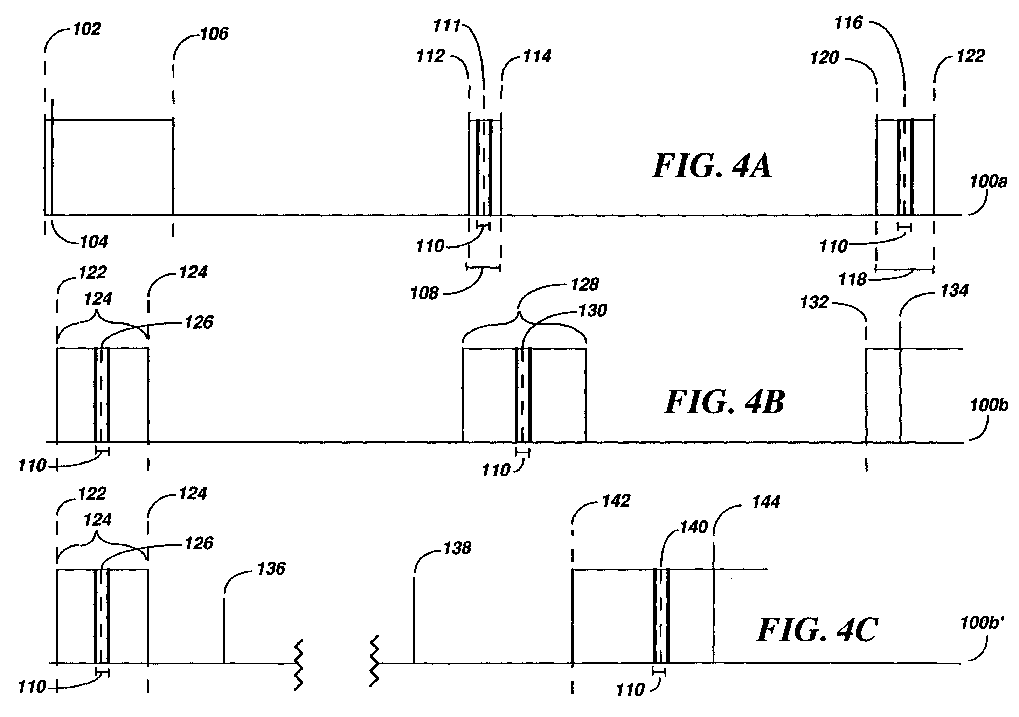

Referring next to FIG. 4, a timing diagram of the functioning of the receiver 12 during the operation of the battery saving routine is shown on lines 100a, 100b and 100b', where time increases from left to right. At time 102, the receiver 12 is activated and remains in the synchronization acquisition loop 64 (FIG. 3A) until time 104 (TIME1) when synchronization is acquired. The receiver then remains activated during the decoding of the frame, step 72,until instructed to turn off, step 74, by information within the frame or the end of the frame is reached , at time 106.

While the receiver is deactivated the width of a time window 108 to search for the synchronous signal is calculated (TIME DURATION), step 76, (FIG. 3A). The standard time width of the sync block, SYNCBLKTIME, is shown as 110 and the end of the first cycle, i.e., TIME1 plus CYCLETIME, is time 111. The receiver is then activated, step 80, (FIG. 3A) at time 112, i.e., when the real time clock has reached a value defined as:

$$TIME1 + (CNT \cdot CYCLETIME) - 1/2 \cdot TIME DURATION$$

shown at step 78, FIG. 3A. The receiver is deactivated at time 114 as no signal is found by the receiver 12.

The second cycle ends at time 116 and a time window 118 is calculated for activation of the receiver 12 at time 120 to search for the signal and deactivation of the receiver 12 to inhibit reception at time 122, where the time window is centered on the completion of the second cycle 116. Similarly, a third time window 124 to search for the signal is centered on the end of a third cycle at time 126 and a fourth time window 128 is centered on the end of a fourth cycle at time 130.

At time 132 the receiver is activated for a fifth time window to search for the signal. The signal is detected and, at time 134 synchronization is acquired thus beginning the process over again.

Alternatively, it is shown that the selective call receiver could be de-energized on time line 100b'. After deactivation of the receiver at the close of the third time window 124, the selective call receiver is de-energized at time 136. Some time later, at time 138, the selective call receiver is energized. The location of the next end of cycle 140 is determined and a time window is calculated whereby the receiver 12 is activated at time 142. The receiver detects the signal and synchronization is acquired at time 144, once again beginning the process over.

After acquiring synchronization the first time followed thereafter in the absence of the signal, the receiver adjusts its acquisition only enough to compensate for system stability. Thus, it can be seen that the present invention results in substantial power conservation over conventional selective call receiver battery saving modes which typically have a fifty per cent duty cycle. Though the amount of receiver activation time increases over time, the increase is small because it depends on the accuracy of the real time dock and the stability of the system signal. In our example above, the activation of the receiver would not approach a fifty per cent duty cycle until TIME DURATION equalled two seconds, one-half of the cycle time. With SYNCBLKTIME equal to 160 msec and TIME DURATION increasing by one msec every cycle, the battery power consumption of the present invention would not begin to equal that of a conventional selective call receiver until 1,840 cycles have passed during which a continually energized selective call receiver does not detect the synchronous signal. A further improvement would allow for the fifty per cent duty cycle to take over at that time so that battery consumption would never be worse than the present fifty per cent duty cycle receivers. Also, to avoid a worse than fifty per cent duty cycle upon energizing a selective call receiver, a further improvement would allow for the receiver to periodically reacquire synchronization even when the selective call receiver is de-energized.

## Claims

1. A method for conserving battery power of a selective call receiver including a real time clock, calculation means for calculating time duration, a nonvolatile memory, and a receiver circuit for receiving a synchronous signal comprising a sync block composed of a bit and frame synchronization portion of a predetermined time duration, and which synchronous signal having a cycle time and a system signal stability, which method comprising the steps of:

    acquiring synchronization (64) at a first time with the synchronous signal while the selective call receiver, including the receiver circuit is energized (63);
    de-energizing (74) said selective call receiver;
    activating(81) said selective call receiver at a second time, subsequent the first time;

    **characterized by** further steps of:

    activating (81)said selective call receiver at said second time without activating said receiver circuit;

storing (70) said first time as a stored value in said nonvolatile memory (26) representing at what time the selective call receiver last acquired synchronization prior to the step of de-energizing;

determining a third time (78 or 84), subsequent the second time, at which the receiver circuit of the selective call receiver is to be activated, based on a time duration (76 or 96) to be measured from the first time, the time duration being computed based on the predetermined time duration of the bit and frame synchronization portion, the real time clock, the cycle time and system signal stability of the synchronous signal; and

activating said receiver circuit (63 or 81) of the selective call receiver at the third time to re-acquire synchronization to the synchronous signal.

2.  A selective call receiver comprising:

a non-volatile memory(26);

a receiver circuit (12) for receiving a synchronous signal comprising a sync block composed of a bit and frame synchronization portion of a predetermined time duration, and which synchronous signal having a cycle time and a system signal stability;

a microprocessor (16) connected to the non-volatile memory (26) and to the receiver circuit (12) which microprocessor (16) comprising activation means for controlling when the receiver circuit is activated and deactivated;

clock means (24) ;

calculation means for calculating time duration;

**characterised by** that:

the microprocessor (16)in the non-volatile memory stores a first time representing the time at which the selective call receiver has last acquired synchronization, so that when the selective call receiver is completely de-energized after the first time, including the receiver circuit (12), and subsequently energized at a second time, the microprocessor determines a third time, subsequent the second time, at which the receiver circuit (12) of the selective call receiver is to be activated, based on a time duration to be measured from the first time, the time duration being computed based on the predetermined time duration of the bit and frame synchronization portion, the cycle time and the system signal stability of the synchronous signals.

**Patentansprüche**

1.  Ein Verfahren zum Einsparen von Batterieleistung eines Selektivrufempfängers mit einer Echtzeituhr, Berechnungsmitteln zur Berechnung von Zeitdauer, einem nicht flüchtigen Speicher, und einer Empfängerschaltung zum Empfang eines synchronen Signals, das einen Sync-Block aufweist, der aus einem Abschnitt zur Bit- und Frame-Synchronisation mit einer vorherbestimmten Zeitdauer aufgebaut ist, und das synchrone Signal eine Zykluszeit und eine Systemsignalstabilität hat, und das Verfahren die folgenden Schritte aufweist:

Erlangung der Synchronisation (64) mit dem synchronen Signal zu einer ersten Zeit, in welcher der Selektivrufempfänger, einschließlich der Empfängerschaltung, mit Strom versorgt wird (63);

Abschaltung der Stromversorgung (74) für den Selektivrufempfänger;

Aktivierung (81) des Selektivrufempfängers zu einer zweiten Zeit, folgend auf die erste Zeit;

weiter **gekennzeichnet durch** die Schritte:

Aktivierung (81) des Selektivrufempfängers zu der zweiten Zeit, ohne die Empfängerschaltung zu aktivieren;

Speicherung (70) der ersten Zeit als gespeicherter Wert im nicht flüchtigen Speicher (26), repräsentativ für die Zeit, zu welcher der Selektivrufempfänger zuletzt vor dem Schritt des Abschaltens der Stromversorgung Synchronisation erlangt hat;

Bestimmung einer auf die zweite Zeit folgenden dritten Zeit (78 oder 84), zu der die Empfängerschaltung des Selektivrufempfängers aktiviert werden muss, basierend auf einer Zeitdauer (76 oder 96), die vom ersten Zeitpunkt aus gemessen werden muss, wobei die Zeitdauer basierend auf der vorherbestimmten Zeitdauer des Abschnitts zur Bit- und Frame-Synchronisation, der Echtzeituhr, der Zykluszeit und der Systemsignalstabilität des synchronen Signals berechnet wird; und

Aktivierung der Empfängerschaltung (63 oder 81) des Selektivrufempfängers zu einer dritten Zeit, um erneut eine Synchronisation mit dem synchronen Signal zu erlangen.

2. Ein Selektivrufempfänger mit:

Einem nicht flüchtigen Speicher (26);

einer Empfängerschaltung (12) zum Empfang eines synchronen Signals, das einen Sync-Block aufweist, der aus einem Abschnitt zur Bit- und Frame Synchronisation mit einer vorherbestimmten Zeitdauer aufgebaut ist, und das synchrone Signal eine Zykluszeit hat und eine Systemsignalstabilität;

einem mit dem nicht flüchtigen Speicher (26) und mit der Empfängerschaltung (12) verbundenen Mikroprozessor (16), und der Mikroprozessor (16) Aktivierungsmittel zur Steuerung aufweist, wann die Empfängerschaltung zu aktivieren oder zu deaktivieren ist;

Zeitgebermitteln (24);

Berechnungsmitteln zur Berechnung von Zeitdauer;

**gekennzeichnet dadurch**, **dass**:

Der Mikroprozessor (16) im nicht flüchtigen Speicher eine erste Zeit speichert, welche die Zeit repräsentiert, zu welcher der Selektivrufempfänger zuletzt die Synchronisation erlangt hat, damit, wenn der Selektivrufempfänger nach der ersten Zeit vollständig von der Stromversorgung getrennt ist, einschließlich der Empfängerschaltung (12), und im Anschluss daran zu einem zweiten Zeitpunkt mit Strom versorgt wird, der Mikroprozessor eine auf die zweiten Zeit folgende dritte Zeit bestimmt, zu der die Empfängerschaltung (12) des Selektivrufempfängers zu aktivieren ist, basierend auf einer Zeitdauer, die vom ersten Zeitpunkt aus gemessen werden muss, und die Zeitdauer berechnet wird basierend auf der vorherbestimmten Zeitdauer des Abschnitts zur Bit- und Frame-Synchronisation, der Zykluszeit und der Systemsignalstabilität des synchronen Signals.

## Revendications

1. Procédé pour économiser l'énergie d'une pile d'un récepteur d'appel sélectif incluant une horloge en temps réel, un moyen de calcul d'une durée, une mémoire non volatile et un circuit de récepteur destiné à recevoir un signal synchrone comprenant un bloc de synchronisation composé d'une portion de synchronisation des bits et des trames d'une durée prédéterminée, ledit signal synchrone ayant un temps de cycle et une stabilité du signal du système, ledit procédé comprenant les étapes suivantes :

accrochage de la synchronisation (64) à un premier temps sur le signal synchrone alors que le récepteur d'appel sélectif, y compris le circuit de récepteur, est sous tension (63) ;
mise hors tension (74) dudit récepteur d'appel sélectif ;
activation (81) dudit récepteur d'appel sélectif à un deuxième temps, suivant le premier temps ;

 caractérisé entre outre par les étapes suivantes :

activation (81) dudit récepteur d'appel sélectif audit deuxième temps sans activation dudit circuit du récepteur ;
stockage (70) dudit premier temps sous forme de valeur mémorisée dans ladite mémoire non volatile (26) représentant le moment auquel le récepteur d'appel sélectif a pour la dernière fois accroché la synchronisation avant l'étape de mise hors tension ;
détermination d'un troisième temps (78 ou 84), suivant le deuxième temps, auquel le circuit de récepteur du récepteur d'appel sélectif doit être activé, basé sur une durée (76 ou 96) à mesurer à partir du premier temps, la durée calculée étant basée sur la durée prédéterminée de la portion de synchronisation des bits et des trames, sur l'horloge en temps réel et sur la stabilité du signal du système du signal synchrone ; et
activation dudit circuit de récepteur (63 ou 81) du récepteur d'appel sélectif à un troisième temps pour accrocher à nouveau la synchronisation sur le signal synchrone.

2. Récepteur d'appel sélectif comprenant :

une mémoire non volatile (26) ;

un circuit de récepteur (12) destiné à recevoir un signal synchrone comprenant un bloc de synchronisation composé d'une portion de synchronisation des bits et des trames d'une durée prédéterminée, ledit signal synchrone ayant un temps de cycle et une stabilité du signal du système ;

un microprocesseur (16) connecté à la mémoire non volatile (26) et au circuit de récepteur (12), ledit microprocesseur (16) comprenant un moyen d'activation destiné à commander le moment où le circuit de récepteur est activé et désactivé ;

un moyen formant horloge (24) ;

un moyen de calcul destiné à calculer la durée ;

**caractérisé en ce que** :

le microprocesseur (16) placé dans la mémoire non volatile stocke un premier temps correspondant au temps auquel le récepteur d'appel sélectif a pour la dernière fois accroché la synchronisation, afin que, lorsque le récepteur d'appel sélectif, y compris le circuit de récepteur (12), est complètement hors tension après le premier temps, puis mis sous tension à un deuxième temps, le microprocesseur détermine un troisième temps, postérieur au deuxième temps, auquel le circuit de récepteur (12) du récepteur d'appel sélectif doit être activé, basé sur une durée à mesurer à partir du premier temps, la durée calculée étant basée sur la durée prédéterminée de la portion de synchronisation des bits et des trames, sur le temps de cycle et sur la stabilité du signal du système des signaux synchrones.

**FIG. 1**

*FIG. 2A*

FIG. 2B

EP 0 513 017 B1

EP 0 513 017 B1

**FIG. 3A**

```
          (A)
                              90
  ┌─────────────────────────────┐
  │ ONTIME = REALTIME(ENERGIZE) │
  └─────────────────────────────┘
                              92
  ┌─────────────────────────────┐
  │         ONCYCLE =           │
  │ INT[(ONTIME-TIME1)/CYCLETIME]│
  └─────────────────────────────┘

  ┌─────────────────────────────┐
  │     CNT = ONCYCLE + 1       │
  └─────────────────────────────┘
                              94
  96
  ┌─────────────────────────────────────┐
  │  TIME DURATION =SYNCBLKTIME +        │
  │ 2* [CLOCKACC * (CNT * CYCLETIME)] +  │
  │ 2* [SIGSTAB * (CNT * CYCLETIME)]     │
  └─────────────────────────────────────┘

  98
        ╱╲
       ╱  ╲      IS TIME          NO
      ╱    ╲  DURATION ≥   ──────────►  (D)
       ╲   ╱    CYCLETIME?
        ╲ ╱
         │
        YES
         │
        (B)
```

```
          (F)        (E)
                      ▲
  84                  │
        ╱╲            │
       ╱  ╲  DOES REALTIME = TIME1 +   NO
      ╱    ╲ (CNT * CYCLETIME) + 1/2 * ─┘
       ╲   ╱    TIME DURATION?
        ╲ ╱
         │
        YES
         │                       86
  ┌─────────────────────┐
  │  DEACTIVATE THE     │
  │    RECEIVER         │
  └─────────────────────┘

  ┌─────────────────────┐
  │    CNT = CNT + 1    │
  └─────────────────────┘
                          88
         │
        (C)
```

**FIG. 3B**

*FIG. 4A*

*FIG. 4B*

*FIG. 4C*

EP 0 513 017 B1